# EUROPÄISCHE PATENTSCHRIFT

(11) **EP 2 756 963 B1**
(45) Veröffentlichungstag und Bekanntmachung des Hinweises auf die Patenterteilung: **26.09.2018**
(21) Anmeldenummer: 14164941.8
(22) Anmeldetag: 13.01.2012
(51) Int. Cl.: B42D 25/00

(54) **Verfahren zur Herstellung eines mehrschichtigen Datenträgers sowie nach diesem Verfahren hergestellter Datenträger**
Method for producing a multilayer data carrier and data carrier produced using the said method
Procédé de fabrication d'un support de données multicouches et support de données fabriqué selon ledit procédé

(30) Priorität: 18.01.2011 CH 86112011
(43) Veröffentlichungstag der Anmeldung: 23.07.2014
(62) Teilanmeldung aus: 12700772.2
(73) Patentinhaber: Gemalto AG, 5000 Aarau (CH)
(72) Erfinder: Egli, Stefan, 4053 Basel (CH); Widmer Gomres, Heidi, 3046 Wahlendorf (CH)
(74) Vertreter: Frischknecht, Harry Ralph

(56) Entgegenhaltungen:
- EP-A1- 0 159 828
- DE-A1- 4 410 431
- DE-A1-102007 034 716
- US-A1- 2008 136 160

## Beschreibung

### TECHNISCHES GEBIET

Die Erfindung betrifft ein Verfahren nach dem Oberbegriff des Anspruchs 1, das in US 2008/0136160 A1 offenbart wird.

Zum Schutz von Datenträgern, beispielsweise Identitätskarten, Pässen, Führerausweisen, Bankkarten etc. mit personalisierten Daten werden vielfältige Sicherheitsmerkmale verwendet. Aus dem Stand der Technik sind die diversesten Sicherheitsmerkmale zum Schutz der Rohkarte ohne personalisierte Daten bekannt. Oftmals ist es jedoch so, dass die Fälscher nicht eine komplette Karte fälschen, sondern bei einer z.B. gestohlenen Karte die personalisierten Daten (Foto, Geburtsdatum, Unterschrift, Name etc.) abändern oder austauschen. Deshalb ist der Schutz dieser personalisierten Daten sehr wichtig. Aus dem Stand der Technik bekannte Techniken zum Schutz solcher Daten sind beispielsweise das Personalisieren eines Zweitbildes in eine Linsenstruktur, so dass das Bild nur unter einem bestimmten Betrachtungswinkel sichtbar ist. Eine andere Möglichkeit zur Einbringung eines Zweitbildes ist das Einbringen eines Rasterbildes in die Karte, indem die Karte perforiert wird. Diese Herstellmethoden sind vergleichsweise aufwändig und bedingen spezielle Einrichtungen bei der Kartenherstellung (Linsenstruktur) oder spezielle Maschinen zur Einbringung des Zweitbildes. Die vorliegende Erfindung zeigt einen Weg, wie die Personalisierung auf einem einfachen Weg ohne zusätzliche Maschinen geschützt werden kann.

### STAND DER TECHNIK

Die EP 1691 989 B1 offenbart einen Datenträger, der eine Metallschicht aufweist, die zwischen zwei transluzenten Deckschichten (Lichtdurchlässigkeit kleiner als 10%) angeordnet ist. Durch Ablation der Metallschicht mittels eines Laserstrahls soll ein "Wasserzeicheneffekt" entstehen.

Die EP 2 109 014 A1 offenbart ein sog. Overlay aus laserfähigem Polycarbonat mit einer holographischen Schicht auf einer Seite. Die holographische Schicht kann metallisiert und partiell mit dem Laser ablatiert werden.

Die WO 2009/139800 offenbart ein Sicherheitsdokument mit einer metallisierten Folie, welche vollflächig zwischen transparente Schichten einlaminiert ist. Ein Grossteil der Folie wird verändert/bedruckt um den Kartenhintergrund zu bilden. Ein Fenster der Folie wird unverändert gelassen. In dieses Fenster wird nach Fertigstellung der Karte mittels Laserablation ein Bild eingebracht, welches von der Vorderseite und Rückseite der Karte sichtbar ist.

Die EP 0 420 261 betrifft ein Verfahren zur Herstellung einer Serie von Datenträgern mit Hologrammen, bei denen die Hologramme durch partielle Zerstörung oder Veränderung der Beugungsstrukturen individualisiert werden.

### DARSTELLUNG DER ERFINDUNG

Der Erfindung liegt die Aufgabe zugrunde, ein Verfahren zur Herstellung eines Datenträgers zu schaffen, der gegen unberechtigte Veränderungen noch besser geschützt ist. Der Datenträger soll dennoch kostengünstig hergestellt werden. Die Aufgabe ist gemäss Anspruch 1 gelöst.

Nach der Erfindung wird ein teilkristalliner opaker Kunststoff verwendet, bei dem vorzugsweise durch den Temperatureintrag der Laserstrahlung die in Kristalliten angeordneten Makromoleküle in eine amorphe und transparente Struktur überführt werden.

Die opake Kunststoffschicht kann zum Beispiel als co-extrudierte Folie oder auch als alleinstehende Folie mit den bekannten Techniken in den Kartenaufbau eingefügt werden.

### KURZE BESCHREIBUNG DER ZEICHNUNGEN

Es zeigen:
- Fig. 1: schematisch eine Draufsicht auf einen Datenträger,
- Fig. 2: einen Querschnitt durch einen Datenträger,
- Fig. 3: einen Querschnitt durch einen Datenträger nach einer Variante,
- Fig. 4: einen Querschnitt durch einen Datenträger nach einer weiteren Variante.

### BESCHREIBUNG BEVORZUGTER AUSFÜHRUNGSFORMEN

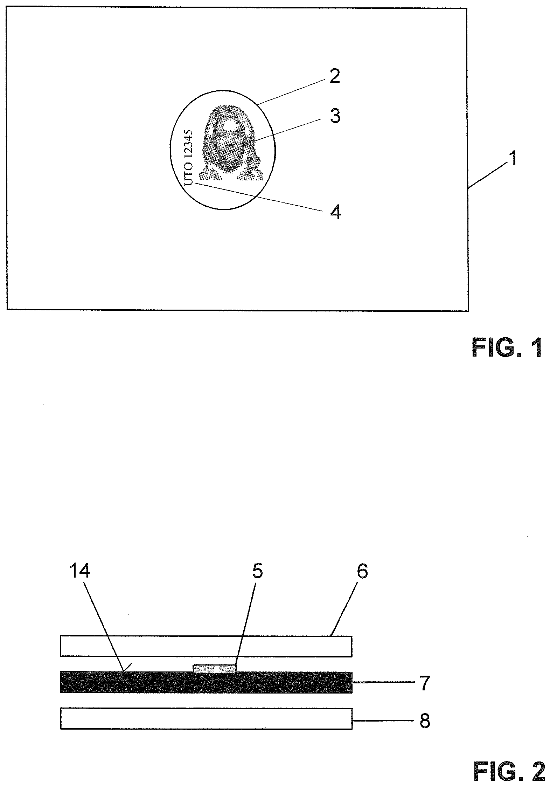

Die Figur 1 zeigt einen Datenträger 1, der gemäss der Figur 2 eine opake Kernfolie 7, eine untere transparente Deckfolie 8 sowie eine obere transparente Deckfolie 6 aufweist. Auf eine Oberseite 14 der Kernfolie 7 ist eine Metallschicht aufgebracht, beispielsweise aufgedampft oder durch Heissprägen aufgebracht. Als Metallschicht wird nachfolgend auch eine metallisierte Schicht oder eine metallische Schicht verstanden. Solche Schichten sind an sich bekannt. Sie sind vergleichsweise dünn und besitzen beispielsweise eine Dicke von 4 Mikrometern, vorzugsweise kleiner als 1 Mikrometer. Die Metallfolie kann auch als Hologramm ausgebildet sein. Die Deckfolie 6, die Kernfolie 7 und die untere Deckfolie 8 werden in an sich bekannter Weise durch Laminieren verbunden. Die Metallschicht 5 befindet sich dann entsprechend zwischen der Kernfolie 7 und der Deckfolie 6. Mit einem Lasergerät wird die Metallschicht so abgetragen, dass beispielsweise das in Fig. 1 gezeigte ablatierte Zweitbild 3 und der ablatierte Zweittext 4 entstehen. Diese entstehen vorzugsweise durch einen Durchbruch in der Metallschicht 5. Durch diese Durchbrüche hindurch ist die opake Kernfolie sichtbar. Vor dem Auftragen der Metallschicht kann die opake Kernfolie im Bereich der Metallschicht bzw. unterhalb dieser bedruckt sein. Das Zweitbild 3 und der Zweittext 4 können dann entsprechend in einem Farbton gesehen werden. Der Zweittext 4 erscheint dann somit beispielsweise blau oder rot.

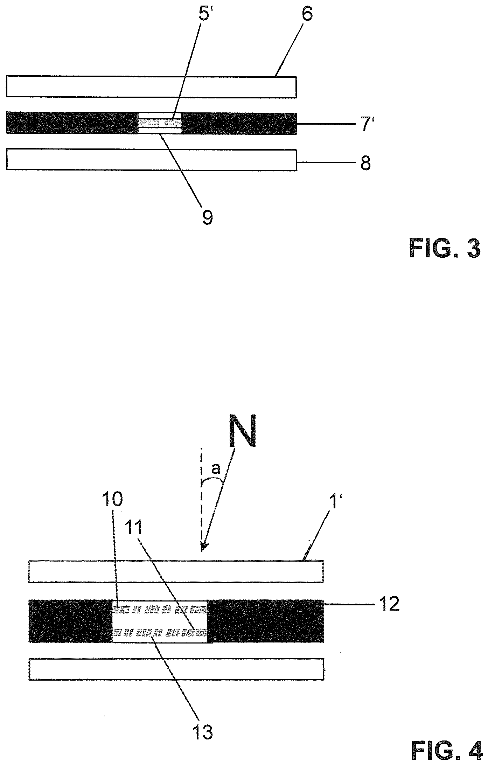

Der Datenträger nach der Fig. 3 besitzt eine Kernfolie 7', die eine transparente Folie 9 aufweist, auf welcher die Metallschicht 5' aufgebracht, beispielsweise aufgedampft ist. Die ablatierten Bereiche sind in diesem Fall von beiden Seiten, d.h. in Fig. 3 von oben durch die Deckfolie 6 und von unten durch die Deckfolie 8 sichtbar.

Die Fig. 4 zeigt einen Datenträger 1', der eine Kernfolie 12 aufweist, die eine transparente Folie 13 besitzt, welche eine erste Metallschicht 10 und eine zweite Metallschicht 11 aufweist. Diese Metallschichten 10 und 11 können ebenfalls aufgedampft oder durch Heissprägen aufgebracht sein. Diese beiden Metallfolien 10 und 11 besitzen zueinander einen Abstand von beispielsweise wenigstens 50 Mikrometer oder vorzugsweise 100 oder mehr Mikrometer. Bei der Ablation mit dem Laser wird wie angedeutet der Datenträger 1' in einem vorgegebenen Winkel A schräg gestellt. Die Ablation findet in beiden Metallschichten 10 und 11 statt. Falls es von der Laserintensität her nicht möglich ist, beide Metallschichten 10 und 11 von der gleichen Kartenseite her zu ablatieren, sind auch zwei passgenaue Laservorgänge auf der Rückseite und der Vorderseite des Datenträgers 1' denkbar. Hierbei wird jeweils die näherliegende Metallschicht 10 bzw. 11 bearbeitet. Durch das Gleichstellen des Datenträgers 1' vor der Laserbearbeitung ist das gelaserte Bild in Durchsicht nur unter dem entsprechenden Blickwinkel sichtbar. Es ist auch denkbar, zwei unterschiedliche Bilder mit sich unterscheidenden Winkeln zu lasern und so bei der Betrachtung mit unterschiedlichen Winkeln einen Kippeffekt zwischen den beiden Bildern bzw. den beiden Metallschichten 10 und 11 zu erhalten. Die Kernschicht 12 kann wie ersichtlich zwischen zwei Schichten bzw. Deckfolien befestigt und insbesondere einlaminiert werden.

### BEZUGSZEICHENLISTE

- 1: Datenträger
- 2: Metallfolie
- 3: ablatiertes Zweitbild
- 4: ablatierter Zweittext
- 5: Metallschicht
- 6: Deckfolie
- 7: opake Kernfolie
- 8: transparente Deckfolie
- 9: transparente Folie
- 10: erste Metallfolie
- 11: zweite Metallfolie
- 12: Kernfolie
- 13: transparente Folie
- 14: Oberseite

## Patentansprüche

1. Verfahren zur Herstellung eines mehrschichtigen Datenträgers, der eine erste Schicht (7) aus Kunststoff besitzt, die eine Oberseite (14) aufweist, auf welcher eine diese Oberseite teilweise bedeckende opake Schicht (5) angeordnet ist und mit einer zweiten Schicht (6) aus Kunststoff, welcher auf der ersten Schicht angeordnet und wenigstens in einem Teilbereich der opaken Schicht transparent ist, wobei die opake Schicht aus einem Material hergestellt ist, das beim Bestrahlen so verändert wird, dass es im bestrahlten Bereich transparent oder zumindest transluzent wird, **dadurch gekennzeichnet, dass** das Material der opaken Schicht ein teilkristalliner Kunststoff ist.

2. Verfahren nach Anspruch 1, **dadurch gekennzeichnet, dass** die opake Schicht zwischen der ersten und der zweiten Kunststoffschicht einlaminiert wird.

3. Verfahren nach Anspruch 1 oder 2, **dadurch gekennzeichnet, dass** die opake Schicht in einem Fenster der ansonsten wenigstens bereichsweisen opaken Schicht angeordnet wird.

4. Verfahren nach einem der Ansprüche 1 bis 3, **dadurch gekennzeichnet, dass** die opake Kunststoffschicht mindestens 20 Mikrometer, vorzugsweise mindestens 50 Mikrometer dick ist.

5. Verfahren nach einem der Ansprüche 1 bis 4, **dadurch gekennzeichnet, dass** die opake Kunststoffschicht vertikal zu deren Ebene oder geneigt zu deren Ebene mit dem Laser bestrahlt wird, so dass die Durchbrüche vertikal oder geneigt zu der genannten Ebene verlaufen.

6. Datenträger hergestellt nach einem der Ansprüche 1 bis 5, wobei der Datenträger vorzugsweise eine Ausweiskarte, eine Seite eines Passes, eine Kreditkarte oder dergleichen ist.

7. Datenträger nach Anspruch 6, **dadurch gekennzeichnet, dass** die opake Schicht aus einem Kunststoff hergestellt ist und dass dieser in einem bestrahlten Bereich transparent oder transluzent ist,
und/oder dass die durch den Laser abladierten Bereiche von beiden Seiten des Datenträgers sichtbar sind.

## Claims

1. A method for producing a multilayer data carrier, which has a first layer (7) of plastic that comprises an upper side on which an opaque layer partially covering this upper side is arranged, and having a second layer (6) of plastic which is arranged on the first layer and is transparent at least in a subregion of the opaque layer, wherein the opaque layer is produced from a material which is modified during irradiation in such a way that it becomes transparent or at least translucent in the irradiated region
**characterized in that**
the material of the opaque layer is a partially crystalline plastic.

2. The method as claimed in claim 1, **characterized in that** the opaque layer is laminated between the first and second plastic layer.

3. The method as claimed in claim 1 or 2, **characterized in that** the opaque layer is arranged in a window of the otherwise at least regionally opaque layer.

4. The method as claimed in one of claims 1 to 3, **characterized in that** the opaque plastic layer is at least 20 micrometers thick, preferably at least 50 micrometers thick.

5. The method as claimed in one of claims 1 to 4, **characterized in that** the opaque plastic layer is, with respect to its plane or at an inclination with respect to its plane, vertically irradiated with the laser, so that the holes extend vertically or at an inclination with respect to said plane.

6. A data carrier produced according to one of claims 1 to 5, wherein the data carrier preferably is an identity card, a page of a passport, a credit card or the like.

7. The data carrier as claimed in claim 6, **characterized in that** the opaque layer is produced from a plastic, and **in that** the latter is transparent or translucent in an irradiated region, and/or **in that** the regions ablated by the laser are visible from both sides of the data carrier.

## Revendications

1. Procédé de fabrication d'un support de données multicouche (1), qui comporte une première couche (7) en matière plastique présentant une face supérieure, sur laquelle une couche opaque (5) recouvrant partiellement cette face supérieure est disposée, et une deuxième couche (6) en matière plastique, qui est disposée sur la première couche et qui est transparente au moins dans une région partielle de la couche opaque, dans lequel la couche opaque est réalisée en matériau pouvant être modifié lors de l'irradiation de façon à devenir transparent ou au moins translucide dans la région irradiée, **caractérisé en ce que** le matériau de la couche opaque est une matière plastique partiellement cristalline.

2. Procédé selon la revendication 1, caractérisé en que la couche opaque est laminée entre la première couche et la deuxième couche.

3. Procédé selon la revendication 1 ou 2, caractérisé en que la couche opaque est disposée dans une fenêtre de la couche opaque étant autrement au moins partiellement opaque par région.

4. Procédé selon la revendication 1 à 3, **caractérisé en ce que** la couche opaque en matière plastique présente une épaisseur d'au moins 20 micromètres, de préférence d'au moins 50 micromètres.

5. Procédé selon la revendication 1 à 4, **caractérisé en ce que** la couche opaque en matière plastique est irradiée avec le laser de manière verticale ou inclinée par rapport à son plan, de sorte que les percées s'étendent de manière verticale ou inclinée par rapport au dit plan.

6. Un support de données réalisé selon une des revendications 1 à 5, dans lequel le support de données est une préférablement une carte d'identité, une page d'un passeport, une carte de crédit ou analogue.

7. Un support de données selon la revendication 6, **caractérisé en ce que** la couche opaque est réalisée en matière plastique et que celle-ci est transparente ou translucide dans une région irradiée, et/ou que les régions ablatées par l'intermédiaire du laser sont visibles depuis les deux faces du support de données.
